# EUROPÄISCHE PATENTSCHRIFT

(11) **EP 4 033 677 B1**
(45) Veröffentlichungstag und Bekanntmachung des Hinweises auf die Patenterteilung: **12.02.2025**
(21) Anmeldenummer: 21209000.5
(22) Anmeldetag: 18.11.2021
(51) Int. Cl.: H04B 10/112, G02B 23/16, H04B 10/118, H01Q 3/08

(54) **SCHWENKMECHANISMUS FÜR KOMMUNIKATIONSEINHEITEN**
PIVOTING MECHANISM FOR COMMUNICATION UNITS
MÉCANISME PIVOTANT POUR UNITÉS DE COMMUNICATION

(30) Priorität: 22.01.2021 DE 102021101423
(43) Veröffentlichungstag der Anmeldung: 27.07.2022
(73) Patentinhaber: Tesat Spacecom GmbH & Co. KG, 71522 Backnang (DE)
(72) Erfinder: JANOCHA, Tobias, 71522 Backnang (DE); SCHEFFEL, Andreas, 71522 Backnang (DE); REICHERTER, Daniel, 71522 Backnang (DE)
(74) Vertreter: LKGLOBAL Lorenz & Kopf Patentanwalt Attorney at Law PartG mbB

(56) Entgegenhaltungen:
- JP-A- H08 288 732
- JP-B2- 2 806 659
- US-B1- 6 259 415
- KESNER JESSICA E ET AL: "Compact optical gimbal as a conformal beam director for large field-of-regard lasercom applications", PROCEEDINGS OF SPIE, IEEE, US, vol. 9354, 16 March 2015 (2015-03-16), pages 93540K - 93540K, XP060049864, ISBN: 978-1-62841-730-2, DOI: 10.1117/12.2084555

## Beschreibung

### Technisches Gebiet

Die vorliegende Beschreibung betrifft eine Kommunikationseinheit sowie deren Bewegungsmechanik für eine Schwenkbewegung um eine Elevationsachse und eine Drehbewegung um eine Azimutachse. Weiterhin betrifft die Beschreibung einen Kommunikationssatelliten mit einer solchen Kommunikationseinheit.

### Technischer Hintergrund

Satellitenkonstellationen finden in jüngster Zeit zunehmend Verbreitung. Eine Satellitenkonstellation kann als Satellitenverbund mit einer Mehrzahl von Satelliten beschrieben werden, wobei die Satelliten jeweils auf einem vorgegebenen Orbit die Erde umkreisen und eine bestimmte Fläche der Erdoberfläche abdecken. Die Anzahl der Satelliten in einer Satellitenkonstellation und der Verlauf der Erdorbits kann so bemessen sein, dass mindestens ein Satellit eine optische Direktverbindung zu einem beliebigen Punkt auf der Erdoberfläche und zu jedem Zeitpunkt herstellen kann.

Mit der zunehmenden Verbreitung von Satellitenkonstellationen im niedrigen und mittleren Erdorbit wandeln sich die Anforderungen an die von den Satelliten mitgeführte Nutzlast hin zu niedrigen Kosten und höheren Stückzahlen, was letztlich die Forderung nach einem niedrigeren Gewicht und einer reduzierten funktionalen und strukturellen Komplexität bei gleichzeitigem Beibehalten der Anforderungen an die Datenübertragung (insbesondere hohe Datenraten, möglichst großer Schwenkbereich und genaue Einstellbarkeit der Kommunikationseinheiten) bedeutet.

DE 10 2016 121 919 A1 beschreibt eine Satellitenkonstellation mit einer Mehrzahl von Kommunikationssatelliten sowie einen Ansatz der Datenübertragung und Routing zwischen den einzelnen Kommunikationssatelliten.

DE 10 2017 127 813 A1 beschreibt ein System und ein Verfahren zum Einstellen einer Abstrahlrichtung eines optischen Kommunikationssignals zwischen einer Kommunikationsplattform und einer Gegenstelle.

Kesner Jessica E. et al.: "Compact optical gimbal as a conformal beam director for large field-of-regard lasercom applications", Proceedings of SPIE, IEEE, US, Vol. 9354, 93540K-1 bis 93540K-10 beschreibt eine Schwenkvorrichtung für eine optische Sende-/Empfangseinheit. Die Sende-/Empfangseinheit ist mit einem Schwenkantrieb (Elevationsantrieb) auf einem Drehtisch angeordnet. Der Elevationsantrieb kann radial versetzt werden, und zwar an verschiedene Positionen zwischen dem Mittelpunkt des Drehtisches und dem äußeren Rand des Drehtisches.

JP 2 806 659 B2 beschreibt eine Sende-/Empfangseinheit für einen Satelliten. Die Sende-/Empfangseinheit kann um mehrere Achsen geschwenkt werden, und die Achsen sind zueinander versetzt.

US 6 259 415 beschreibt ein Antennensystem mit einer Antenne, die auf einem Drehtisch gelagert ist und um eine Azimutachse und eine Elevationsachse geschwenkt werden kann.

JP H08 288 732 A beschreibt einen Mechanismus zum Schwenken einer Antenne an einem Satelliten. Die Antenne wird mittels eines ersten Drehmechanismus über eine erste Schwenkachse aus einer verstauten Position ausgeschwenkt. Ein zweiter Drehmechanismus ist angeordnet, die Antenne über eine zweite Schwenkachse zu schwenken, um die Antenne auszurichten. Die erste Schwenkachse und die zweite Schwenkachse verlaufen senkrecht zueinander.

Für die Übertragung von Daten können Kommunikationseinheiten verschiedenster Art verwendet werden. Kommunikationseinheiten nutzen allgemein elektromagnetische Signale für die Datenübertragung. Optische Kommunikationseinheiten beispielsweise bestehen aus mehreren Komponenten, welche die Aufgabe haben, das optische Signal auszurichten und nachzuführen (beispielsweise durch Umlenkspiegel oder eine Bewegung der optischen Einheit selbst), optische Signale aufzubereiten (durch eine optische Einheit), Daten zu verarbeiten (durch eine elektronische Einheit), und die Kommunikationseinheit zu steuern. Es können jedoch auch Richtantennen verwendet werden, deren Abstrahl- und Empfangsrichtung auf eine Gegenstelle ausgerichtet werden kann.

Optische Signale können beispielsweise durch mehrere Spiegelelemente, welche jeweils um unterschiedlich angeordnete Achsen schwenkbar sind, von einer Gegenstelle auf die optische Einheit (oder umgekehrt) lenken. Hierbei ist die optische Einheit selbst, als Quelle oder Senke der optischen Signale, unbeweglich, jedoch lenken die Spiegel die optischen Signale um. Dieser Aufbau hat den Nachteil, dass die Mechanik sehr komplex ist und viel Platz erfordert sowie ein vergleichsweise hohes Gewicht hat.

Eine andere Möglichkeit ist, die optische Einheit, welche auch als Teleskop bezeichnet werden kann, zu schwenken. Herkömmliche Aufbauten haben jedoch einen vergleichsweise kleinen Schwenkbereich des Teleskops um die Elevationsachse.

Noch eine andere Möglichkeit ist unter dem Begriff "Coudé-Teleskop" bekannt. Hierbei wird der optische Freistrahl mittels eines Umlenkspiegels durch die Elevationsachse gelenkt und außerhalb des schwenkbaren Teleskops fokussiert.

### Beschreibung

Es kann als Aufgabe betrachtet werden, eine Kommunikationseinheit anzugeben, welche sich durch eine kompakte und platzsparende Konstruktion und gleichzeitig einen großen Schwenkbereich um die Elevationsachse und einen großen Drehbereich um die Azimutachse auszeichnet.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem ersten Aspekt ist eine Kommunikationseinheit zum Senden und Empfangen von Kommunikationssignalen angegeben. Die Kommunikationseinheit weist eine Sende-/Empfangs-Einheit, einen Elevationsantrieb und einen Azimutantrieb auf. Die Sende-/Empfangs-Einheit ist ausgestaltet, Kommunikationssignale zu emittieren und/oder zu empfangen. Der Elevationsantrieb ist über ein Elevationslager mit der Sende-/Empfangs-Einheit gekoppelt und ist ausgeführt, die Sende-/Empfangs-Einheit um eine Elevationsachse des Elevationslagers zu schwenken. Der Azimutantrieb ist mit der Sende-/Empfangs-Einheit und dem Elevationsantrieb gekoppelt und ist ausgeführt, die Sende-/Empfangs-Einheit samt Elevationsantrieb um eine Azimutachse zu drehen. Die Elevationsachse ist mit Bezug auf die Azimutachse exzentrisch angeordnet, so dass die Elevationsachse zu der Azimutachse um einen lateralen Versatz versetzt ist. Der Azimutantrieb weist eine Stützfläche auf, mit welcher der Elevationsantrieb und die Sende-/Empfangs-Einheit gekoppelt ist. Der Azimutantrieb ist ausgeführt, die Stützfläche bei der Drehbewegung um die Azimutachse zu drehen. Die Elevationsachse ist soweit von der Azimutachse lateral versetzt, dass die Elevationsachse lateral außerhalb der Stützfläche angeordnet ist. Das Elevationslager ist an einer Position mit einem Gehäuse der Sende-/Empfangs-Einheit verbunden, dass die Sende-/Empfangs-Einheit vollständig neben den Azimutantrieb und die Stützfläche schwenkbar ist.

Die Sende-/Empfangs-Einheit kann beispielsweise eine optische Einheit in Form eines Teleskops sein, welches Linsen und/oder Spiegel sowie Sender und Empfänger für optische Signale aufweist. In dem Fall wird die Sende-/EmpfangsEinheit als optische Einheit bezeichnet. Die optische Einheit kann eine Sendepfad zum Senden von optischen Signalen und einen Empfangspfad zum Empfangen von optischen Signalen implementieren. Im Sendepfad wird die optische Einheit mit Signalen versorgt, welche in der optischen Einheit ggf. verarbeitet werden, um dann als optische Signale leitungslos übertragen zu werden. Im Empfangspfad erhält die optische Einheit optische Signale über einen leitungslosen Übertragungsweg, verarbeitet oder bearbeitet diese Signale, um sie dann in ein Signalübertragungsmedium einzuspeisen, wo das eingespeiste Signal leitungsgebunden übertragen wird.

Die Sende-/Empfangs-Einheit kann aber auch als eine Richtantenne mit vorgebbarer Sende- und Empfangsrichtung ausgestaltet sein, wobei die Richtantenne so schwenkbar ist, wie dies für die optische Sende-/EmpfangsEinheit beschrieben wird.

Aus Veranschaulichungszwecken wird im Folgenden insbesondere auf optische Kommunikationseinheiten mit optischen Einheiten Bezug genommen. Es wird jedoch darauf hingewiesen, dass die vorliegende Beschreibung sowohl für optische Einheiten als auch für eine Richtantenne oder jede andere Sende-/Empfangs-Einheit mit einer vorgebbaren und gerichteten Sende- und Empfangsrichtung gilt. Das bedeutet insbesondere, dass jegliche Bezugnahmen in der Beschreibung auf eine optische Einheit und auf eine optische Kommunikationseinheit lediglich als Beispiel zu verstehen sind und in analoger Weise für Kommunikationseinheiten mit anderen Signalträgern (elektromagnetische Wellen) in Form von beispielsweise Richtantennen gelten.

Die Elevationsachse erstreckt sich quer zu der Azimutachse, insbesondere senkrecht dazu. Der Elevationsantrieb ist mechanisch mit der Sende-/EmpfangsEinheit gekoppelt und dient dazu, die Sende-/Empfangs-Einheit um die Elevationsachse zu schwenken. Der Elevationsantrieb kann beispielsweise ein elektrisch betriebener Motor sein, beispielsweise ein Schrittmotor, welcher direkt oder über ein Getriebe mit der Sende-/Empfangs-Einheit verbunden ist, um eine Bewegung des Motors auf die Sende-/Empfangs-Einheit zu übertragen und die Sende-/Empfangs-Einheit um die Elevationsachse zu schwenken. Je nach Bewegungsrichtung des Motors oder Einstellung des Getriebes kann die Sende-/Empfangs-Einheit die Schwenkbewegung um die Elevationsachse in beide möglichen Richtungen ausführen.

Der Azimutantrieb kann ebenfalls ein elektrisch betriebener Antrieb wie der Elevationsantrieb sein. Der Azimutantrieb kann beispielsweise als Drehteller ausgestaltet sein, welcher den Elevationsantrieb und die Sende-/EmpfangsEinheit trägt. Der Azimutantrieb kann dabei mit Hilfe des elektrisch betriebenen Antriebs eine Drehbewegung um die Azimutachse ausführen. Bei dieser Drehbewegung wird die Sende-/Empfangs-Einheit und der Elevationsantrieb durch die Bewegung des Drehtellers um die Azimutachse geführt.

Der Azimutantrieb und der Elevationsantrieb werden von einer externen Steuerung angesteuert, um eine Position anzufahren, welche durch einen Azimut- und Elevationswinkel definiert ist. Diese Position wird durch die relative Anordnung einer Kommunikationsgegenstelle vorgegeben, auf welche die Sende-/EmpfangsEinheit ausgerichtet werden muss, um das Senden und Empfangen von Kommunikationssignalen zu ermöglichen. Auf die Steuerung des Azimutantriebs und des Elevationsantriebs wird vorliegend nicht näher eingegangen. Hierfür greift der Fachmann auf bekannte Mechanismen zurück. Maßgeblich ist, dass mit der hier beschriebenen Struktur der Kommunikationseinheit durch einen einfachen Aufbau ein großer Drehbereich um die Azimutachse und ein großer Schwenkbereich um die Elevationsachse ermöglicht wird. Wenn die Kommunikationseinheit an Bord eines Kommunikationssatelliten verwendet wird, kann die Sende-/Empfangs-Einheit während eines Orbitalflugs des Kommunikationssatelliten wahlweise auf eine Gegenstelle ausgerichtet und in dieser Orientierung gehalten werden.

Die Elevationsachse ist mit Bezug auf die Azimutachse lateral versetzt. Dies ermöglicht es, dass die Sende-/Empfangs-Einheit bei einer Schwenkbewegung um die Elevationsachse soweit in Richtung des Azimutantriebs geschwenkt werden kann, dass die Sende-/Empfangs-Einheit mindestens teilweise seitlich neben dem Azimutantrieb liegt. Somit wird ermöglicht, einen Schwenkbereich der Sende-/Empfangs-Einheit um die Elevationsachse zu vergrößern. Die physischen Dimensionen des Azimutantriebs bzw. des Drehtellers bilden damit zwar weiterhin eine natürliche Begrenzung des Schwenkbereichs um die Elevationsachse, allerdings wird der Schwenkbereich der Sende-/Empfangs-Einheit um die Elevationsachse durch den lateralen Versatz der Elevationsachse mit Bezug auf die Azimutachse oder den Azimutantrieb vergrößert.

Wenn die Sende-/Empfangs-Einheit um die Elevationsachse schwenkt, führt die Sende-/Empfangs-Einheit mit Bezug zu dem Azimutantrieb bzw. dem zugehörigen Drehteller nicht nur eine Rotationsbewegung aus, sondern die Sende-/EmpfangsEinheit insgesamt führt eine entlang eines Kreisbogens um die Elevationsachse verlaufende kombinierte rotatorische und translatorische Bewegung mit Bezug zu dem Drehteller des Azimutantriebs aus. Auch wenn die Elevationsachse an sich ihre Position nicht verändert, so führt ein geometrischer Mittelpunkt der Sende-/Empfangs-Einheit diese besagte kombinierte rotatorische und translatorische Bewegung aus. In anderen Worten: während die Sende-/Empfangs-Einheit um die Elevationsachse schwenkt, erfährt sie eine laterale Versatzbewegung und kann damit bei fortgeführter Schwenkbewegung neben den Drehteller schwenken, was den möglichen Schwenkbereich um die Elevationsachse vergrößert.

Der hier beschriebene Aufbau ermöglicht eine Drehbewegung um die Azimutachse von bis zum 360° und eine Schwenkbewegung um die Elevationsachse von bis zu 180°. Weiterhin ermöglicht es der hier beschriebene Aufbau, im Falle einer optischen Einheit auf eine komplexe bewegliche Spiegelmechanik außerhalb der Sende-/Empfangs-Einheit zu verzichten, weil die Sende-/Empfangs-Einheit an sich bewegt wird und die Bewegung der Sende-/Empfangs-Einheit durch die hier beschriebene Anordnung der Elevationsachse bezogen auf die Azimutachse einen großen Schwenkbereich um die Elevationsachse und einen großen Drehbereich um die Azimutachse ermöglicht.

In einer Ausführungsform ist das Elevationslager mit einem Gehäuse der Sende-/Empfangs-Einheit verbunden und die Elevationsachse ist mit Bezug zu einer Mittelachse des Gehäuses exzentrisch angeordnet.

Die Sende-/Empfangs-Einheit weist ein Gehäuse auf, in welchem optische und/oder elektrische Bauteile angeordnet sind, welche die Kommunikationssignale emittieren und/oder empfangen. Die Kommunikationssignale verlassen das Gehäuse durch eine Ein-/Auslassöffnung bzw. dringen durch die Ein-/Auslassöffnung in das Gehäuse ein und treffen dann auf die entsprechenden Bauteile. Wenn die Sende-/Empfangs-Einheit um die Elevationsachse geschwenkt und/oder um die Azimutachse gedreht wird, betrifft die jeweilige Bewegung oder auch kombinierte Schwenk-/Drehbewegung das gesamte Gehäuse der Sende-/Empfangs-Einheit. Demnach ist das Elevationslager mit dem Gehäuse der Sende-/Empfangs-Einheit mechanisch verbunden. Eine Mittelachse des Gehäuses verläuft beispielsweise in derjenigen Richtung, in welcher die Kommunikationssignale die Sende-/Empfangs-Einheit verlassen und erstreckt sich zentral durch das Gehäuse, d.h. mittig bezogen auf die links-rechts-Ausdehnung des Gehäuses (die links-rechts-Ausdehnung ist definiert als Richtung auf die Elevationsachse zu bzw. hiervon weg). Mit Bezug auf diese Mittelachse ist das Elevationslager exzentrisch an dem Gehäuse der Sende-/Empfangs-Einheit angeordnet.

Das Elevationslager ist beispielsweise in einem Eck des Gehäuses angeordnet. Andere mögliche Positionen des Elevationslagers werden weiter unten beschrieben. In dieser Ausführungsform ist die Elevationsachse exzentrisch mit Bezug auf die Mittelachse des Gehäuses angeordnet.

In einer weiteren Ausführungsform weist der Azimutantrieb eine Stützfläche auf, mit welcher der Elevationsantrieb und die Sende-/Empfangs-Einheit gekoppelt sind, wobei der Azimutantrieb ausgeführt ist, die Stützfläche bei der Drehbewegung um die Azimutachse zu drehen.

Die Stützfläche kann als Drehtisch bezeichnet werden, auf welchem oder an welchem der Elevationsantrieb und/oder die Sende-/Empfangs-Einheit angeordnet und hiermit verbunden sind. Der Azimutantrieb dreht die Stützfläche um die Azimutachse. Dabei wird der Elevationsantrieb und die Sende-/Empfangs-Einheit in dieselbe Drehbewegung um die Azimutachse versetzt.

Der Elevationsantrieb und die Sende-/Empfangs-Einheit sind entweder jeweils unmittelbar oder mittelbar mit der Stützfläche verbunden. Beispielsweise kann der Elevationsantrieb unmittelbar mit der Stützfläche verbunden sein und die Sende-/Empfangs-Einheit ist ihrerseits unmittelbar mit dem Elevationsantrieb verbunden, womit die Sende-/Empfangs-Einheit mittelbar mit der Stützfläche verbunden ist. Jedenfalls resultiert eine Drehbewegung der Stützfläche in einer entsprechenden Bewegung des Elevationsantriebs sowie der Sende-/Empfangs-Einheit um die Azimutachse.

Bevorzugt definiert die Stützfläche den äußeren Umfang des Azimutantriebs, d.h. die Komponenten des Azimutantriebs befinden sich unterhalb der Stützfläche und ragen nicht seitlich über den äußeren Rand der Stützfläche hinaus.

Die Stützfläche kann beispielsweise kreisrund sein. Somit kann die Sende-/Empfangs-Einheit auch um die Azimutachse gedreht werden, wenn die Sende-/Empfangs-Einheit soweit um die Elevationsachse geschwenkt ist, dass die Sende-/Empfangs-Einheit teilweise seitlich neben der Stützfläche platziert ist. Im Falle einer kreisrunden Stützfläche kann die Sende-/Empfangs-Einheit um 360° um die Azimutachse gedreht werden, ohne an die Stützfläche anzustoßen. Es ist aber auch denkbar, dass nur ein Bereich der Stützfläche einen Kreisbogen bildet, beispielsweise von 270°. Dann ist die Drehbewegung der Sende-/EmpfangsEinheit um die Azimutachse auf die besagten 270° des Kreisbogens der Stützfläche beschränkt, wenn die Sende-/Empfangs-Einheit um die Elevationsachse neben die Stützfläche geschwenkt ist.

Nicht jeder laterale Versatz zwischen Elevationsachse und Azimutachse ermöglicht es notwendigerweise, dass die Sende-/Empfangs-Einheit vollständig neben die Stützfläche geschwenkt werden kann. Dass die Sende-/EmpfangsEinheit teilweise um die Stützfläche herum oder neben die Stützfläche geschwenkt werden kann, bedeutet, dass ein Schwenkbereich von größer als 90° ermöglicht wird.

Erfindungsgemäß ist die Elevationsachse soweit von der Azimutachse lateral versetzt, dass die Elevationsachse lateral außerhalb der Stützfläche angeordnet ist.

Damit liegt die Elevationsachse seitlich außerhalb der Stützfläche. Das Elevationslager ist an einer Position mit dem Gehäuse der Sende-/EmpfangsEinheit verbunden, dass die Sende-/Empfangs-Einheit vollständig neben den Azimutantrieb und den zugehörigen Drehtisch geschwenkt werden.

In einer weiteren Ausführungsform weist die Kommunikationseinheit weiterhin eine Verarbeitungseinheit zum Verarbeiten von Kommunikationssignalen auf, wobei die Verarbeitungseinheit mittels eines Signalübertragungsmediums mit der Sende-/Empfangs-Einheit verbunden ist, so dass die von der Sende-/Empfangs-Einheit zu übertragenden und/oder empfangenen Kommunikationssignale zwischen der Verarbeitungseinheit und der Sende-/Empfangs-Einheit übertragen werden können.

Die Verarbeitungseinheit führt beispielsweise Schritte der Signalverarbeitung und/oder Signalaufbereitung durch, beispielsweise Anpassung der Codierung, Verstärkung, etc. In der Verarbeitungseinheit können aber auch weitere Funktionen implementiert sein, welche eine inhaltliche Signalverarbeitung mit den zu übertragenden oder empfangenen Signalen ausführen.

In einer weiteren Ausführungsform ist das Signalübertragungsmedium ausgeführt, Kommunikationssignale, insbesondere optische Signale, zu übertragen und verläuft mindestens abschnittsweise entlang der Azimutachse und/oder der Elevationsachse.

Das Signalübertragungsmedium kann beispielsweise eine Glasfaserleitung sein. Die Glasfaserleitung verbindet die Verarbeitungseinheit und die Sende-/Empfangs-Einheit. Somit muss die Glasfaserleitung sowohl eine Drehbewegung der Sende-/Empfangs-Einheit um die Azimutachse als auch eine Schwenkbewegung um die Elevationsachse mitmachen. Indem die Glasfaserleitung entlang der Azimutachse und/oder der Elevationsachse verläuft, wird das Ausmaß der Biegungsmomente auf die Glasfaser reduziert. Durch die Dreh- und Schwenkbewegung in den beiden Achsen wird an diesen Stellen hauptsächlich ein Torsionsmoment auf die Glasfaser ausgeübt. Glasfaserleitungen sind typischerweise so ausgestaltet, dass Torsionsmomente mit einer niedrigen mechanischen Belastung der Glasfaser einhergehen, wohingegen Biegemomente die Glasfaser mechanisch deutlich stärker belasten. Indem die Glasfaserleitung entlang der Azimutachse und/oder Elevationsachse verläuft, wird dieser Erkenntnis Rechnung getragen und die mechanische Belastung der Glasfaser bei der Bewegung der Sende-/Empfangs-Einheit geringgehalten.

In einer weiteren Ausführungsform weist die Kommunikationseinheit weiterhin eine Halte- und Verriegelungseinheit auf, wobei die Halte- und Verriegelungseinheit ausgeführt ist, die Sende-/Empfangs-Einheit in einer Initialposition zu verriegeln, so dass die Sende-/Empfangs-Einheit von einer Schwenkbewegung um die Elevationsachse und/oder von einer Drehbewegung um die Azimutachse abgehalten wird.

Die Halte- und Verriegelungseinheit wird vorteilhaft verwendet, wenn die Kommunikationseinheit in einem Satelliten verwendet wird und die Sende-/Empfangs-Einheit während der Startphase des Satelliten auf dem Weg in ein Erdorbit fixiert werden muss, um unkontrollierte Bewegung der Sende-/EmpfangsEinheiten, die von den hohen Kräften in der Startphase verursacht werden können, zu vermeiden.

Die Halte- und Verriegelungseinheit kann beispielsweise ein kombinierter Bolzen-Haken-Mechanismus sein, welcher die Sende-/Empfangs-Einheit mit dem Elevationsantrieb verbindet, um eine Schwenkbewegung um die Elevationsachse zu unterbinden, und welcher zusätzlich den Azimutantrieb verriegelt, um eine ungewollte Drehung um die Azimutachse zu unterbinden. Die Halte- und Verriegelungseinheit kann zusätzlich in das Gehäuse der optischen Einheit eingreifen, damit die Sende-/Empfangs-Einheit während der Startphase nicht nur von dem Elevationslager getragen oder gehalten wird, sondern zusätzlich von der Halte- und Verriegelungseinheit fixiert wird.

Die Initialposition kann auch als Ausgangsposition oder Parkposition der Sende-/Empfangs-Einheit bezeichnet werden. Die Initialposition kann insbesondere eine Grenze der Schwenkbewegung um die Elevationsachse in einer Richtung bilden. D.h. dass die Sende-/Empfangs-Einheit ausgehend von der Initialposition nicht in beide Richtungen geschwenkt werden kann, sondern nur in eine Richtung weg von der Halte- und Verriegelungseinheit. Das bedeutet beispielsweise, dass die Sende-/Empfangs-Einheit in der Initialposition und in dem verriegelten Zustand der Halte- und Verriegelungseinheit keine Schwenkbewegung um das Elevationslager ausführen kann und dementsprechend kein Drehmoment auf das Elevationslager wirkt, sondern das Elevationslager höchstens Stützkräfte aufbringen muss, um die Sende-/Empfangs-Einheit in der Initialposition zu halten. Dies kann dazu beitragen, die mechanische Belastung des Elevationslagers gering zu halten.

In einer weiteren Ausführungsform ist die Sende-/Empfangs-Einheit in einer Initialposition so ausgerichtet, dass eine Abstrahlrichtung der Kommunikationssignale durch eine Ein-/Auslassöffnung der Sende-/EmpfangsEinheit parallel oder senkrecht zu der Azimutachse verläuft.

Es kann gewünscht sein, dass die Ein-/Auslassöffnung des Gehäuses der Sende-/Empfangs-Einheit in der Initialposition eine bestimmte Orientierung mit Bezug zu dem Satelliten aufweist, beispielsweise um das Eindringen von Fremdpartikeln in die Sende-/Empfangs-Einheit während der Startphase des Satelliten zu verhindern oder das Ausmaß hiervon zu reduzieren. Das Elevationslager kann so an dem Gehäuse der Sende-/Empfangs-Einheit angeordnet sein, dass die Ein-/Auslassöffnung in der Initialposition wunschgemäß angeordnet ist. Die Abstrahlrichtung der Kommunikationssignale durch die Ein-/Auslassöffnung des Gehäuses der Sende-/Empfangs-Einheit kann parallel zu der bereits genannten Mittelachse des Gehäuses verlaufen.

Gemäß einem weiteren Aspekt ist ein Kommunikationssatellit angegeben, welcher eine Kommunikationseinheit wie hierin beschrieben aufweist.

Die Kommunikationseinheit kann vorteilhaft als Sender und/oder Empfänger von elektromagnetischen oder optischen Kommunikationssignalen in einem Kommunikationssatelliten verwendet werden. Die Sende-/Empfangs-Einheit wird um die Azimutachse gedreht und/oder um die Elevationsachse geschwenkt, um die Sende-/Empfangs-Einheit auf eine Gegenstelle auszurichten, damit ein Kommunikationssignal zu der Gegenstelle gesendet oder von dieser empfangen werden kann.

Der hier beschriebene Aufbau der Kommunikationseinheit ermöglicht ein gutes Nachführen und Ausrichten der Sende-/Empfangs-Einheit bezogen auf die Gegenstelle, weil ein großer Schwenkbereich um die Elevationsachse und ein großer Drehbereich um die Azimutachse ermöglicht wird und gleichzeitig eine geringe Anzahl von Komponenten sowie ein einfacher mechanischer Aufbau verwendet wird.

Unter einem Kommunikationssatelliten wird vorliegend ein Raumfahrzeug verstanden, welches sich mindestens zeitweise über der Erdoberfläche bewegt oder in einer Erdumlaufbahn befindet oder dafür vorgesehen ist, über der Erdoberfläche oder in einer Erdumlaufbahn eingesetzt zu werden, wobei dieses Raumfahrzeug eine Kommunikationseinrichtung an Bord aufweist, welche den Signalaustausch mit einer Gegenstelle auf der Erde oder über der Erdoberfläche, beispielsweise an Bord eines anderen Kommunikationssatelliten oder Luft- oder Raumfahrzeugs, ermöglicht. Der Begriff des Kommunikationssatelliten wird also funktional definiert, dahingehend dass es sich um ein Raumfahrzeug handelt, welches eine Kommunikationseinrichtung zum Austausch von Kommunikationssignalen an Bord hat. Bevorzugt ist der Kommunikationssatellit ausgestaltet, dass es einen längeren Zeitraum von einigen Jahren in einem Erdorbit verwendet wird und die Erde auf einer vorgegebenen Umlaufbahn umkreist. Während der Bewegung des Kommunikationssatelliten auf seiner Umlaufbahn kann die Sende-/Empfangs-Einheit der Kommunikationseinheit auf eine Gegenstelle ausgerichtet und der Gegenstelle nachgeführt werden. Der Aufbau der Kommunikationseinheit ermöglicht einen großen Schwenkbereich trotz eines einfachen mechanischen Aufbaus und eines damit einhergehenden geringen Gewichts.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: eine schematische Darstellung eines Kommunikationssatelliten und einer Gegenstelle gemäß einem Ausführungsbeispiel.
- **Fig. 2**: eine schematische Darstellung einer optischen Kommunikationseinheit gemäß einem Ausführungsbeispiel in einer Seitenansicht.
- **Fig. 3**: eine schematische Darstellung einer optischen Kommunikationseinheit gemäß einem Ausführungsbeispiel in einer Draufsicht.
- **Fig. 4**: eine schematische Darstellung einer optischen Kommunikationseinheit gemäß einem Ausführungsbeispiel in einer Seitenansicht.
- **Fig. 5**: eine schematische Darstellung einer optischen Kommunikationseinheit gemäß einem Ausführungsbeispiel in einer Seitenansicht.
- **Fig. 6**: eine schematische Darstellung einer optischen Kommunikationseinheit gemäß einem Ausführungsbeispiel in einer Seitenansicht.

### Detaillierte Beschreibung von Ausführungsbeispielen

Die Beispiele in den Figuren werden mit Bezugnahme auf eine optische Kommunikationseinheit 100 mit einer optischen Einheit 110 beschrieben. Die hier dargelegten Prinzipien gelten jedoch auch für andere Sende-/Empfangs-Einheiten, welche allgemein elektromagnetische Signale für die Signalübertragung nutzen und sind nicht auf optische Einheiten beschränkt.

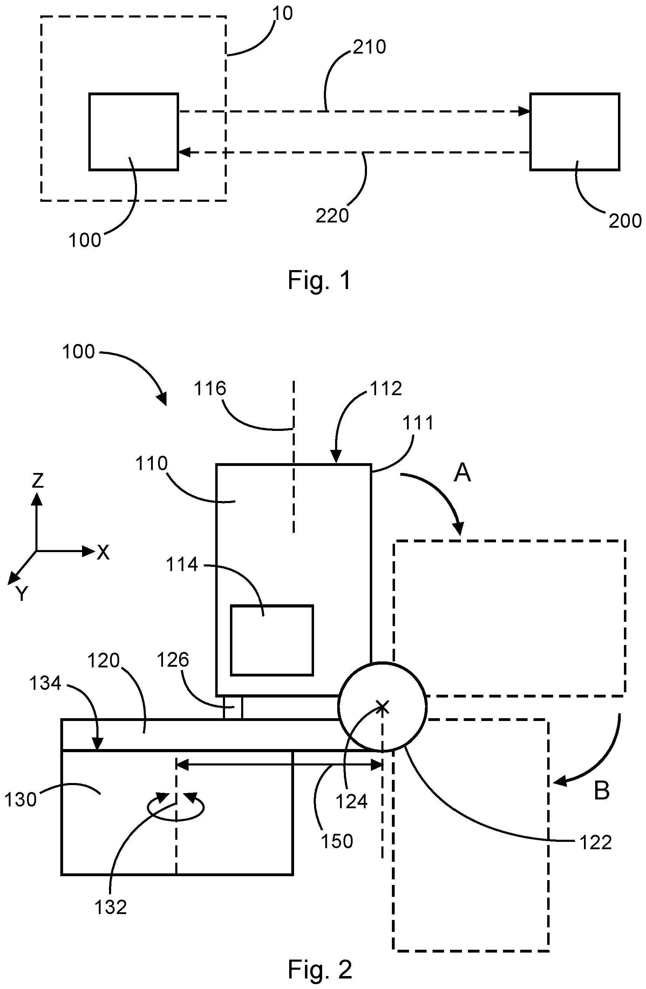

Fig. 1 zeigt eine schematische Darstellung einer optischen Kommunikationseinheit 100 und einer Gegenstelle 200. Die optische Kommunikationseinheit 100 und die Gegenstelle 200 stellen Endpunkte einer Kommunikationsverbindung dar. Zwischen diesen beiden Endpunkten können Kommunikationssignale 210, 220 leitungslos übertragen werden. Die Kommunikationssignale werden beispielsweise über einen Kanal übertragen, wobei die zwischen der optischen Kommunikationseinheit 100 und der Gegenstelle 200 in beide Richtungen weisenden gestrichelten Pfeile einen bidirektionalen Datenaustausch symbolisieren sollen. Der Fachmann kann im Zusammenhang mit der hier beschriebenen optischen Kommunikationseinheit 100 und der Gegenstelle 200 auf sämtliche bekannten Übertragungsverfahren zurückgreifen. Die Kommunikationssignale 210, 220 werden zwischen der optischen Kommunikationseinheit 100 und der Gegenstelle 200 in dem hier beschriebenen Beispiel leitungslos und optisch übertragen.

Die optische Kommunikationseinheit 100 ist an Bord eines Satelliten 10 angeordnet und ist dafür ausgelegt, mit einer Gegenstelle 200 zu kommunizieren, welche in einem anderen Luftfahrzeug oder Raumfahrzeug oder auf der Erdoberfläche (statisch oder mobil) angeordnet ist.

Die in Fig. 1 gezeigte Konfiguration kann auch als Kommunikationssystem bezeichnet werden. Die Gegenstelle kann auf jegliche dem Fachmann bekannte Weise ausgestaltet sein. Während der Satellit 10 seiner vorgegebenen Umlaufbahn um die Erde folgt, kann die optische Einheit der optischen Kommunikationseinheit gemäß den hierin beschriebenen Prinzipien auf die Gegenstelle 200 ausgerichtet werden und diese Ausrichtung beibehalten, um einen Austausch von optischen Kommunikationssignalen 210, 220 zwischen der optischen Kommunikationseinheit und der Gegenstelle zu ermöglichen.

Fig. 2 zeigt eine schematische Darstellung einer optischen Kommunikationseinheit 100. Die optische Kommunikationseinheit 100 weist in diesem Beispiel eine optische Einheit 110, einen Elevationsantrieb 120 und einen Azimutantrieb 130 auf.

Die optische Einheit 110 weist ein Gehäuse 111 mit einer Ein-/Auslassöffnung 112 und in dem Gehäuse 111 angeordneten optischen Bauteilen 114 auf. Die optischen Bauteile 114 sind beispielsweise übliche in der optischen Datenübertragung verwendete Bauteile, welche ein optisches Signal in Richtung einer Gegenstelle emittieren und/oder ein von einer Gegenstelle ausgesandtes optisches Signal empfangen.

Die optische Einheit 110 ist mit einem Elevationslager 122 gekoppelt, welches es ermöglicht, dass die optische Einheit 110 um eine Elevationsachse 124 geschwenkt werden kann. Die Elevationsachse 124 verläuft entlang der Y-Achse. Die Schwenkbewegung um die Elevationsachse 124 ist schematisch angedeutet durch in verschiedenen Positionen und nach Schwenkbewegungen A und B um jeweils 90° gezeigten Positionen der optischen Einheit 110, wobei die optische Einheit 110 in diesen Positionen jeweils gestrichelt gezeichnet ist.

In der Initialposition der optischen Einheit 110 weist die Öffnung 112 nach oben. Nach der Schwenkbewegung A um 90° im Uhrzeigersinn weist die Öffnung 112 nach rechts und nach der weiteren Schwenkbewegung B um 90° im Uhrzeigersinn weist die Öffnung 112 nach unten. Somit kann die hierin beschriebene optische Kommunikationseinheit 100 einen großen Winkelbereich für die Schwenkbewegung um die Elevationsachse 124 ermöglichen. In dem in Fig. 2 gezeigten Beispiel zeichnet sich die optische Einheit 110 durch einen Winkelbereich von 180° für die Schwenkbewegung um die Elevationsachse 124 aus.

Die optische Einheit 110 kann aber auch so mit dem Elevationslager 122 verbunden sein, dass die Öffnung 112 in der Initialposition in Richtung des Elevationsantriebs 120 zeigt. Ein solcher Aufbau kann dazu beitragen, die Öffnung 112 und die optischen Bauteile 114 vor dem Eindringen von Fremdpartikeln zu schützen.

In der Initialposition liegt die optische Einheit 110 auf einer Halte- und Verriegelungseinheit 126 auf bzw. ist mit dieser mechanisch gekoppelt. Somit wird die optische Einheit 110 in der Initialposition nicht nur von dem Elevationslager 122 gehalten, sondern auch von der Halte- und Verriegelungseinheit 126. Die Halte- und Verriegelungseinheit 126 kann beispielsweise in das Gehäuse 111 der optischen Einheit 110 eingreifen, damit die optische Einheit 110 fest mit der Halte- und Verriegelungseinheit 126 verbunden ist und auch beim Einwirken von äußeren Kräften, beispielsweise in der Startphase des Satelliten, in welchem die optische Kommunikationseinheit 100 eingebaut ist, in der Initialposition gehalten wird. In der Initialposition verläuft eine Mittelachse 116 bzw. optische Achse (die Richtung, in welcher optische Signale emittiert oder empfangen werden) parallel zu der Z-Achse.

Der Elevationsantrieb 120 ist mit dem Elevationslager 122 verbunden, so dass der Elevationsantrieb 120 eine Kraft auf die optische Einheit 110 übertragen kann, um die optische Einheit 110 um die Elevationsachse 124 zu schwenken.

Für einen platzsparenden Aufbau ist die optische Einheit 110 auf dem Elevationsantrieb 120 montiert. Der Elevationsantrieb 120 seinerseits ist auf einer Stützfläche 134 des Azimutantriebs 130 montiert. Der Azimutantrieb 130 ist ausgeführt, eine Rotationsbewegung um die Azimutachse 132 auszuführen, wobei die Azimutachse 132 parallel zu der Z-Achse verläuft. Im Falle einer Drehbewegung um die Azimutachse 132 dreht sich auch die Stützfläche 134 entsprechend und überträgt diese Drehbewegung auf die optische Einheit 110.

Wie in Fig. 2 gezeigt ist die Elevationsachse 124 um einen lateralen Versatz 150 von der Azimutachse 132 versetzt. Wenn die optische Einheit 110 aus der Initialposition im Uhrzeigersinn um die Elevationsachse 124 schwenkt, kann diese Schwenkbewegung einen Winkel größer als 90° abdecken. Selbst wenn die optische Einheit 110 mindestens teilweise seitlich neben die Stützfläche 134 des Azimutantriebs 130 geschwenkt wurde (also in eine Position, deren Schwenkwinkel größer als der Winkel in Position A, also 90° ausgehend von der Initialposition, und kleiner oder gleich dem Schwenkwinkel in Position B, also 180° ausgehend von der Initialposition, ist), kann noch eine Drehbewegung um die Azimutachse 132 ausgeführt werden.

Wie der Fig. 2 entnommen werden kann, dient der hier beschriebene Aufbau der optischen Kommunikationseinheit der flexiblen und kompakten Auslegung von optischen Sende- und Empfangseinheiten für Satelliten, insbesondere von Satelliten, die vorteilhaft in Satellitenkonstellationen verwendet werden können.

Die außergewöhnliche Ausführung der Dreh- (Drehbewegung um die Azimutachse) und Kipp-Mechanismen (Schwenkbewegung um die Elevationsachse) ermöglicht einen Drehbereich um die Z-Achse von bis zu 360° sowie einen Kippbereich um die X oder Y-Achse von bis zu 180° von seiner Initialposition. Durch die aufrechte Position der optischen Einheit 110 in der Initialposition wird eine optimale Lasteinleitung der Startlasten gewährleistet, was die hier beschriebene optische Kommunikationseinheit 100 für eine große Anzahl von Missionsprofilen einsetzbar macht. Die optische Kommunikationseinheit zeichnet sich insbesondere durch die exzentrische Aufhängung des Elevationslagers aus. Die Positionierung des Elevationslagers in einem Abstand von mehr als der Hälfte des Radius der Stützfläche 134 bezogen auf die Azimutachse ermöglicht hohe Flexibilität und - im Zusammenspiel mit der Halte- und Verriegelungseinheit 126- bietet eine gute Einleitung der Startlasten in die Struktur, bei gleichzeitig hohem Auslenkungswinkel der optischen Einheit. Der große Kipp- und Drehbereich ermöglich ein ebenso großes effektives Sichtfeld (Winkelbereich, in welchem eine optische Verbindung zu einer Gegenstelle aufgebaut werden kann) bei gleichzeitig kompakter Bauweise.

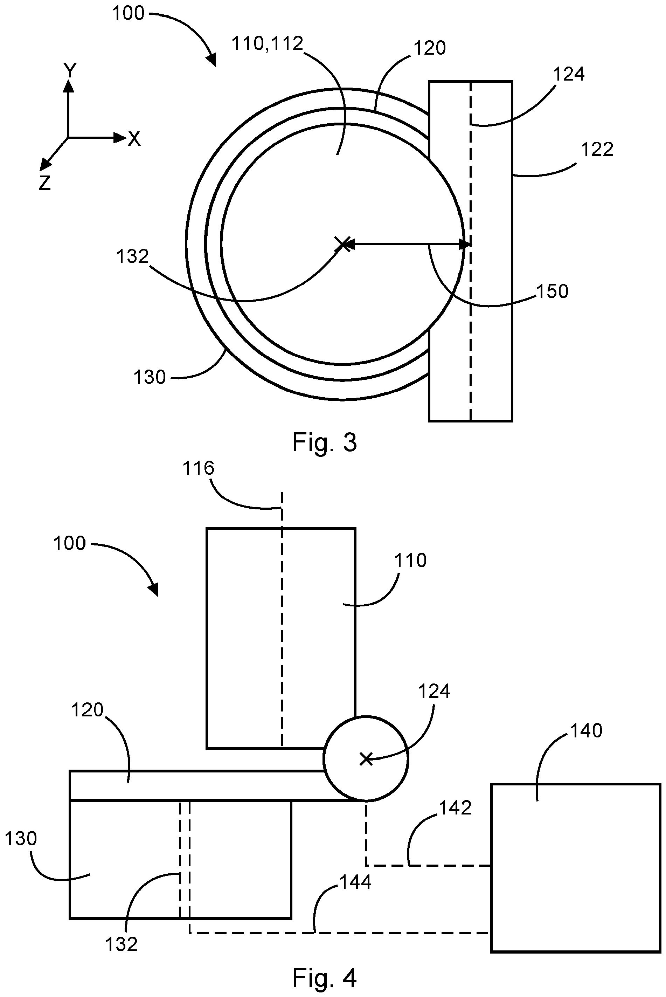

Fig. 3 zeigt eine Draufsicht auf die optische Kommunikationseinheit 100 mit der optischen Einheit 110 in der Initialposition. In der Draufsicht auf die optische Kommunikationseinheit 100 ist mittig die Ein-/Auslassöffnung 112 des Gehäuses der optischen Einheit 110 gezeigt. Die Öffnung 112 kann einen Durchmesser haben, welcher kleiner als der Durchmesser des Gehäuses der optischen Einheit ist, jedoch kann sich die Öffnung 112 auch über eine gesamte Stirnfläche des Gehäuses der optischen Einheit erstrecken. Auch wenn das Gehäuse der optischen Einheit hier kreisförmig dargestellt ist, kann das Gehäuse der optischen Einheit auch andere Formen haben. Wenn die optische Einheit aus der Initialposition um die Elevationsachse 124 geschwenkt wird, bewegt sich die optische Einheit in Fig. 3 nach rechts. Das Elevationslager 126 ist an dem Elevationsantrieb 120 befestigt. Der Elevationsantrieb 120 wiederum liegt auf dem Azimutantrieb 130 auf. Wenn der Azimutantrieb 130 eine Drehbewegung um die Azimutachse 132 ausgeführt, werden der Elevationsantrieb 120, das Elevationslager 122 und die optische Einheit 110 bei dieser Drehbewegung mitgeführt. Die Drehbewegung kann auch ausgeführt werden, wenn sich die optische Einheit 110 nicht in der Initialposition befindet, sondern neben den Azimutantrieb 130 geschwenkt ist. Dies liegt daran, dass die Elevationsachse 124 um einen lateralen Versatz 150 von der Azimutachse 132 versetzt ist.

Fig. 4 zeigt eine weitere schematische Darstellung der optischen Kommunikationseinheit 100 mit den bereits in Fig. 1 gezeigten und mit Bezug hierzu beschriebenen Komponenten. Auf die bereits in Fig. 1 gezeigten Komponenten wird hier nicht erneut eingegangen.

Die optische Kombinationseinheit 100 weist in diesem Beispiel weiterhin eine Verarbeitungseinheit 140 auf, welche mit einem ersten Signalübertragungsmedium 142 und einem zweiten Signalübertragungsmedium 144 mit der optischen Einheit 110 verbunden ist. Die Verarbeitungseinheit 140 kann beispielsweise Prozessoren, Mikrocontroller und andere elektronische Bauteile aufweisen, welche Funktionen der Signalverarbeitung, Signalaufbereitung und/oder Signalverstärkung ausführen. Die Signalübertragungsmedien 142, 144 sind beispielsweise optische Übertragungsmedien bzw. Glasfasern. Bevorzugt werden die Signalübertragungsmedien 142, 144 entlang der Azimutachse 132 oder der Elevationsachse 124 auf die optische Einheit 110 geführt. Hierdurch wird die mechanische Belastung auf die Signalübertragungsmedien während der Dreh- und Schwenkbewegung der optischen Einheit 110 geringgehalten.

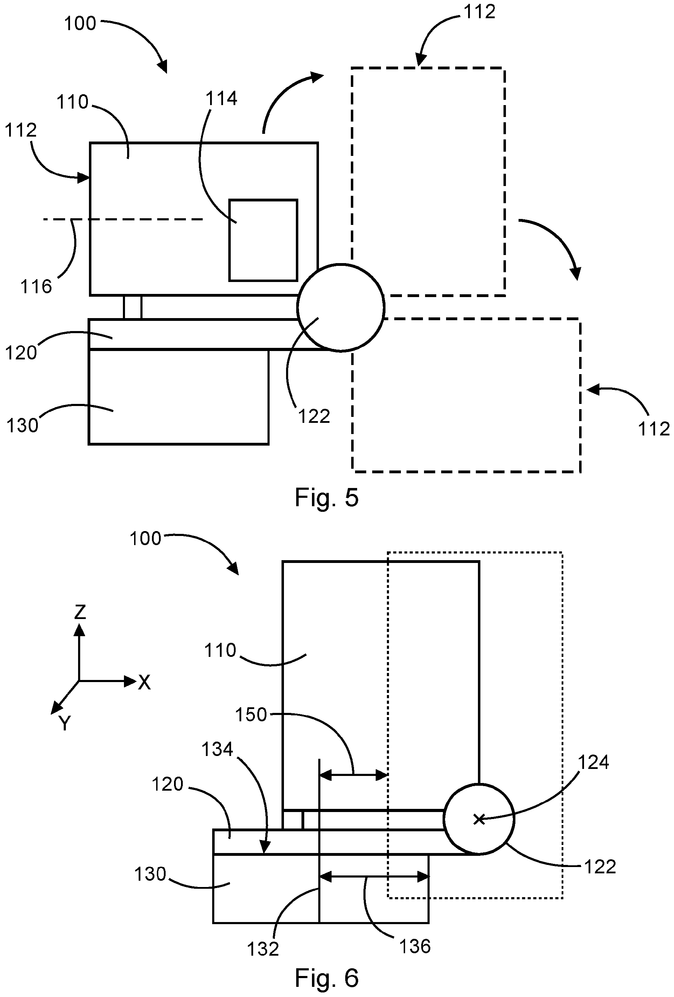

Fig. 5 zeigt einen alternativen Aufbau einer optischen Kommunikationseinheit 100, wobei sich die Orientierung der optischen Einheit 110 in der Initialposition von der Orientierung der optischen Einheit 110 aus Fig. 2 unterscheidet. Für die Beschreibung der weiteren Komponenten wird auch die bisherigen Figuren verwiesen.

Die Mittelachse bzw. optische Achse 116 der optischen Einheit 110 ist in Fig. 5 im Vergleich zu dem Beispiel aus Fig. 2 um 90° gedreht und verläuft in dem Koordinatensystem der Fig. 2 parallel zu der X-Achse. Auch in dem Beispiel der Fig. 5 ist je nach Positionierung des Elevationslagers 122 eine Schwenkbereich der optischen Einheit 110 von bis zu 180° möglich. **In** der Initialposition liegt das Gehäuse 111 der optischen Einheit mit einer Seitenfläche auf der Halte- und Verriegelungseinheit 126 auf, wohingegen die optische Einheit 110 in der Fig. 2 mit einer Bodenfläche auf der Halte- und Verriegelungseinheit aufliegt und hiermit gekoppelt bzw. verriegelt ist.

Das Beispiel in Fig. 5 hat den Vorteil, dass die optische Kommunikationseinheit 100 in der Initialposition weniger Platz einnimmt. Außerdem kann durch die andersartige Orientierung der optischen Einheit in der Initialposition die Öffnung 112 in dem Gehäuse 111 so positioniert werden, dass weniger Fremdpartikel während einer Startphase des Satelliten in die Öffnung 112 eindringen. Dies kann dazu beitragen, die emittierten oder empfangenen optischen Signale weniger zu beeinträchtigen.

Fig. 6 zeigt eine optische Kombinationseinheit 100, wobei in dieser Darstellung die möglichen vorteilhaften Positionen des Elevationslagers angedeutet sind. Das Elevationslager 122 hat zunächst einen lateralen Versatz 150 zu der Azimutachse 132. Dieser laterale Versatz 150 (Abstand entlang der X-Achse) ist in einem vorteilhaften Beispiel größer oder gleich der Hälfte des Radius 136 der Stützfläche 134. Das Elevationslager 122 kann soweit lateral versetzt sein, dass es seitlich über die Stützfläche 134 teilweise oder vollständig hinausragt. Das Elevationslager 122 ist in der Darstellung der Fig. 6 mit dem rechten unteren Eck des Gehäuses der optischen Einheit verbunden. Dies ist jedoch nicht die einzig mögliche Position, um das Elevationslager mit dem Gehäuse der optischen Einheit zu verbinden. Vielmehr kann das Elevationslager entlang der Z-Achse über die gesamte Erstreckung des Gehäuses mit dem Gehäuse verbunden werden.

Durch die hierin beschriebene kompakte Bauweise der optischen Kommunikationseinheit 100 wird die Anzahl der Baugruppen erheblich reduziert, was sich in einer deutlichen Masse- und Kostenersparnis widerspiegelt. So wird beispielsweise auf außerhalb der optischen Einheit angeordnete schwenkbare Spiegel verzichtet, weil die gesamte optische Einheit 110 drehbar und schwenkbar ist. Dennoch wird ein großer Schwenkbereich um die Elevationsachse von bis zu 180° und ein Drehbereich um die Azimutachse von bis zu 360° ermöglicht.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Satellit
- 100: Kommunikationseinheit
- 110: Sende-/Empfangs-Einheit
- 111: Gehäuse
- 112: Ein-/Auslassöffnung
- 114: optische Bauteile
- 116: Mittelachse
- 120: Elevationsantrieb
- 122: Elevationslager
- 124: Elevationsachse, Rotationsachse (parallel zu Y-Achse)
- 126: Halte- und Verriegelungseinheit
- 130: Azimutantrieb
- 132: Azimutachse, Rotationsachse (parallel zu Z-Achse)
- 134: Stützfläche
- 136: Radius der Stützfläche
- 140: Verarbeitungseinheit
- 142: erstes Signalübertragungsmedium
- 144: zweites Signalübertragungsmedium
- 150: lateraler Versatz
- 200: Gegenstelle
- 210: Kommunikationssignal
- 220: Kommunikationssignal

## Patentansprüche

1. Kommunikationseinheit (100) zum Senden und Empfangen von Kommunikationssignalen, aufweisend:
eine Sende-/Empfangs-Einheit (110), welche ausgestaltet ist, Kommunikationssignale zu emittieren und/oder zu empfangen;
einen Elevationsantrieb (120), welcher über ein Elevationslager (122) mit der Sende-/Empfangs-Einheit (110) gekoppelt ist und ausgeführt ist, die Sende-/Empfangs-Einheit (110) um eine Elevationsachse (124) des Elevationslagers (122) zu schwenken;
einen Azimutantrieb (130), welcher mit der Sende-/Empfangs-Einheit (110) und dem Elevationsantrieb (120) gekoppelt ist und ausgeführt ist, die Sende-/Empfangs-Einheit (110) samt Elevationsantrieb (120) um eine Azimutachse (132) zu drehen;
wobei die Elevationsachse (124) mit Bezug auf die Azimutachse (132) exzentrisch angeordnet ist, so dass die Elevationsachse (124) zu der Azimutachse (132) um einen lateralen Versatz (150) versetzt ist;
wobei der Azimutantrieb (130) eine Stützfläche (134) aufweist, mit welcher der Elevationsantrieb (120) und die Sende-/Empfangs-Einheit (110) gekoppelt sind;
wobei der Azimutantrieb (130) ausgeführt ist, die Stützfläche (134) bei der Drehbewegung um die Azimutachse (132) zu drehen;
**dadurch gekennzeichnet, dass**
die Elevationsachse (124) soweit von der Azimutachse (132) lateral versetzt ist, dass die Elevationsachse (124) lateral außerhalb der Stützfläche (134) angeordnet ist; und
das Elevationslager (122) an einer Position mit einem Gehäuse (111) der Sende-/Empfangs-Einheit (110) so verbunden ist, dass die Sende-/EmpfangsEinheit (110) vollständig neben den Azimutantrieb (130) und die Stützfläche (134) schwenkbar ist.

2. Kommunikationseinheit (100) nach Anspruch 1,
wobei die Elevationsachse (124) mit Bezug zu einer Mittelachse (116) des Gehäuses (111) exzentrisch angeordnet ist.

3. Kommunikationseinheit (100) nach einem der voranstehenden Ansprüche,
weiterhin aufweisend eine Verarbeitungseinheit (140) zum Verarbeiten von Kommunikationssignalen;
wobei die Verarbeitungseinheit (140) mittels eines
Signalübertragungsmediums (142, 144) mit der Sende-/Empfangs-Einheit (110) verbunden ist, so dass die von der Sende-/Empfangs-Einheit (110) zu übertragenden und/oder empfangenen Signale zwischen der Verarbeitungseinheit (140) und der Sende-/Empfangs-Einheit (110) übertragen werden können.

4. Kommunikationseinheit (100) nach Anspruch 3,
wobei das Signalübertragungsmedium (142, 144) ausgeführt ist, Signale zu übertragen und mindestens abschnittsweise entlang der Azimutachse (132) und/oder der Elevationsachse (124) verläuft.

5. Kommunikationseinheit (100) nach einem der voranstehenden Ansprüche,
weiterhin aufweisend eine Halte- und Verriegelungseinheit (126);
wobei die Halte- und Verriegelungseinheit (126) ausgeführt ist, die Sende-/Empfangs-Einheit (110) in einer Initialposition zu verriegeln, so dass die Sende-/Empfangs-Einheit (110) von einer Schwenkbewegung um die Elevationsachse (124) und/oder von einer Drehbewegung um die Azimutachse (132) abgehalten wird.

6. Kommunikationseinheit (100) nach einem der voranstehenden Ansprüche,
wobei die Sende-/Empfangs-Einheit (110) in einer Initialposition so ausgerichtet ist, dass eine Abstrahlrichtung optischer Signale durch eine Ein-/Auslassöffnung (112) der Einheit parallel oder senkrecht zu der Azimutachse verläuft.

7. Kommunikationseinheit (100) nach einem der voranstehenden Ansprüche,
wobei die Kommunikationseinheit (100) eine optische Kommunikationseinheit ist;
wobei die Sende-/Empfangs-Einheit (110) eine optische Einheit ist.

8. Kommunikationssatellit (10), aufweisend eine Kommunikationseinheit (100) nach einem der voranstehenden Ansprüche.

## Claims

1. Communication unit (100) for sending and receiving communication signals, having:
a sending/receiving unit (110), which is designed to emit and/or to receive communication signals;
an elevation drive (120), which is coupled to the sending/receiving unit (110) by way of an elevation bearing (122) and is designed to swivel the sending/receiving unit (110) about an elevation axis (124) of the elevation bearing (122);
an azimuth drive (130), which is coupled to the sending/receiving unit (110) and the elevation drive (120) and is designed to turn the sending/receiving unit (110) together with the elevation drive (120) about an azimuth axis (132);
the elevation axis (124) being arranged eccentrically with respect to the azimuth axis (132), so that the elevation axis (124) is offset in relation to the azimuth axis (132) by a lateral offset (150);
the azimuth drive (130) having a supporting area (134), to which the elevation drive (120) and the sending/receiving unit (110) are coupled;
the azimuth drive (130) being designed to turn the supporting area (134) about the azimuth axis (132) during the turning movement;
**characterized in that**
the elevation axis (124) is laterally offset from the azimuth axis (132) to such an extent that the elevation axis (124) is arranged laterally outside the supporting area (134); and
the elevation bearing (122) is connected to a housing (111) of the sending/receiving unit (110) in a position such that the sending/receiving unit (110) can be swivelled to completely alongside the azimuth drive (130) and the supporting area (134).

2. Communication unit (100) according to Claim 1,
the elevation axis (124) being arranged eccentrically with respect to a central axis (116) of the housing (111).

3. Communication unit (100) according to one of the preceding claims,
also having a processing unit (140) for processing communication signals;
the processing unit (140) being connected to the sending/receiving unit (110) by means of a signal transmission medium (142, 144), so that the signals to be transmitted and/or received by the sending/receiving unit (110) can be transmitted between the processing unit (140) and the sending/receiving unit (110).

4. Communication unit (100) according to Claim 3,
the signal transmission medium (142, 144) being designed to transmit signals and running at least partly along the azimuth axis (132) and/or the elevation axis (124).

5. Communication unit (100) according to one of the preceding claims,
also having a holding and locking unit (126);
the holding and locking unit (126) being designed to lock the sending/receiving unit (110) in an initial position, so that the sending/receiving unit (110) is stopped from performing a swivelling movement about the elevation axis (124) and/or a turning movement about the azimuth axis (132).

6. Communication unit (100) according to one of the preceding claims,
the sending/receiving unit (110) in an initial position being aligned such that a radiating direction of optical signals passes through an inlet/outlet opening (112) of the unit parallel or perpendicular to the azimuth axis.

7. Communication unit (100) according to one of the preceding claims,
the communication unit (100) being an optical communication unit;
the sending/receiving unit (110) being an optical unit.

8. Communication satellite (10), having a communication unit (100) according to one of the preceding claims.

## Revendications

1. Unité de communication (100) pour émettre et recevoir des signaux de communication, présentant :
une unité d'émission/réception (110) qui est configurée pour émettre et/ou recevoir des signaux de communication ;
un dispositif d'entraînement d'élévation (120) qui est couplé à l'unité d'émission/réception (110) par l'intermédiaire d'un palier d'élévation (122) et est réalisé pour faire pivoter l'unité d'émission/réception (110) autour d'un axe d'élévation (124) du palier d'élévation (122) ;
un dispositif d'entraînement d'azimut (130) qui est couplé à l'unité d'émission/réception (110) et au dispositif d'entraînement d'élévation (120) et est réalisé pour faire tourner l'unité d'émission/réception (110) avec le dispositif d'entraînement d'élévation (120) autour d'un axe d'azimut (132) ;
dans laquelle l'axe d'élévation (124) est disposé de manière excentrique par rapport à l'axe d'azimut (132) de sorte que l'axe d'élévation (124) est décalé d'un décalage latéral (150) par rapport à l'axe d'azimut (132) ;
dans laquelle le dispositif d'entraînement d'azimut (130) présente une surface d'appui (134) à laquelle le dispositif d'entraînement d'élévation (120) et l'unité d'émission/réception (110) sont couplés ;
dans laquelle le dispositif d'entraînement d'azimut (130) est réalisé pour faire tourner la surface d'appui (134) lors du mouvement de rotation autour de l'axe d'azimut (132) ;
**caractérisée en ce que**
l'axe d'élévation (124) est décalé latéralement par rapport à l'axe d'azimut (132) à tel point que l'axe d'élévation (124) est disposé latéralement à l'extérieur de la surface d'appui (134) ; et
le palier d'élévation (122) est relié dans une position à un boîtier (111) de l'unité d'émission/réception (110) de telle sorte que l'unité d'émission/réception (110) peut pivoter entièrement à côté du dispositif d'entraînement d'azimut (130) et la surface d'appui (134) .

2. Unité de communication (100) selon la revendication 1,
dans laquelle l'axe d'élévation (124) est disposée de manière excentrique par rapport à un axe médian (116) du boîtier (111).

3. Unité de communication (100) selon l'une quelconque des revendications précédentes,
présentant en outre une unité de traitement (140) pour traiter des signaux de communication ;
dans laquelle l'unité de traitement (140) est reliée au moyen d'un support de transmission de signal (142, 144) à l'unité d'émission/réception (110) de sorte que les signaux à transmettre et/ou reçus par l'unité d'émission/réception (110) peuvent être transmis entre l'unité de traitement (140) et l'unité d'émission/réception (110).

4. Unité de communication (100) selon la revendication 3,
dans laquelle le support de transmission de signal (142, 144) est réalisé pour transmettre des signaux et s'étend au moins par endroits le long de l'axe d'azimut (132) et/ou de l'axe d'élévation (124).

5. Unité de communication (100) selon l'une quelconque des revendications précédentes,
présentant en outre une unité de maintien et de verrouillage (126) ;
dans laquelle l'unité de maintien et de verrouillage (126) est réalisée pour verrouiller l'unité d'émission/réception (110) dans une position initiale de sorte que l'unité d'émission/réception (110) est empêchée d'effectuer un mouvement de pivotement autour de l'axe d'élévation (124) et/ou un mouvement de rotation autour de l'axe d'azimut (132).

6. Unité de communication (100) selon l'une quelconque des revendications précédentes,
dans laquelle l'unité d'émission/réception (110) dans une position initiale est alignée de telle sorte qu'une direction de rayonnement de signaux optiques passe par une ouverture d'entrée/sortie (112) de l'unité en parallèle ou perpendiculairement à l'axe d'azimut.

7. Unité de communication (100) selon l'une quelconque des revendications précédentes,
dans laquelle l'unité de communication (100) est une unité de communication optique ;
dans laquelle l'unité d'émission/réception (110) est une unité optique.

8. Satellite de communication (10), présentant une unité de communication (100) selon l'une quelconque des revendications précédentes.
